# EUROPÄISCHE PATENTSCHRIFT

(11) **EP 1 539 486 B1**
(45) Veröffentlichungstag und Bekanntmachung des Hinweises auf die Patenterteilung: **27.12.2006**
(21) Anmeldenummer: 03782174.1
(22) Anmeldetag: 11.09.2003
(51) Int. Cl.: B32B 17/10, C03C 27/12

(54) **BRANDSCHUTZ-VERGLASUNGSEINHEIT**
FIREPROOF GLAZING UNIT
UNITE DE VITRAGE COUPE-FEU

(30) Priorität: 13.09.2002 EP 02020632
(43) Veröffentlichungstag der Anmeldung: 15.06.2005
(73) Patentinhaber: Scheuten Glasgroep, 5900 AA Venlo (NL)
(72) Erfinder: VILLARI, Valentino, 41063 Mönchengladbach (DE); VAN OIJEN, Albert, NL- 5851 CC Afferden (NL)
(74) Vertreter: Jostarndt, Hans-Dieter
(86) Internationale Anmeldenummer: PCT/EP2003/010097
(87) Internationale Veröffentlichungsnummer: WO 2004/024441

(56) Entgegenhaltungen:
- WO-A-99/35102
- US-A- 3 597 050
- PATENT ABSTRACTS OF JAPAN vol. 015, no. 177 (C-0829), 7. Mai 1991 (1991-05-07) & JP 03 040944 A (FUJITA CORP), 21. Februar 1991 (1991-02-21)

## Beschreibung

Die Erfindung betrifft eine Brandschutz-Verglasungseinheit, bestehend aus wenigstens zwei transparenten Substraten, die im Abstand zueinander angeordnet sind, wobei sich zwischen den Substraten wenigstens eine transparente Brandschutzschicht befindet.

Um transparente Verglasungseinheiten als Brandschutzverglasungen auszuführen, ist es bekannt, Verbundgläser zu verwenden, die wenigstens eine transparente Brandschutzschicht aufweisen. Die Wirkung einer solchen Brandschutzschicht kann beispielsweise darin bestehen, dass sie im Brandfall zu einem sich verfestigenden Schaum aufbläht, der dadurch ein Hitzeschild gegen die auftreffende Wärme bildet. Ein Großteil der bekannten Brandschutzsysteme weist jedoch den Nachteil auf, dass die verwendeten Brandschutzschichten nicht UV-stabil sind. Durch den Einfall von Sonnenlicht tritt daher bei längeren Standzeiten eine Trübung der Brandschutzschicht ein, die das Erscheinungsbild der Verglasung erheblich beeinträchtigt. Dies ist vor allem bei der Verwendung von Brandschutzverglasungen in Wohn-, Arbeits- und Lebensbereichen nachteilig, da dort das optische Erscheinungsbild von Glasscheiben von großer Bedeutung ist.

Um die UV-Empfindlichkeit von Brandschutzschichten zu verringern, ist es bekannt, bei der Herstellung der Schichten unterschiedliche Zusatzstoffe zu verwenden. Beispielsweise schlägt die Deutsche Offenlegungsschrift DE 44 35 841 die Verwendung von Kali-Wasserglas als Zumischungsbestandteil einer Brandschutzzwischenschicht zwischen zwei Glasscheiben vor. Dabei ist der Zumischungsbestandteil aus Kali-Wasserglas massemäßig so gewählt, dass, abhängig von den Einsatzbedingungen, eine störende Empfindlichkeit gegen ultraviolettes Licht nicht mehr bestehen soll. Die Hauptbestandteile der beschriebenen Brandschutzschicht sind Natron-Wasserglas und Wasser, während organische Zusatzstoffe in Form von mehrwertigen Alkoholen und/oder Zucker möglichst kleine Restbestandteile darstellen.

Der Nachteil stabilisierter Schutzschichten besteht darin, dass die Herstellung von Brandschutzschichten durch die jeweiligen Verfahren stets mit erhöhtem Aufwand verbunden ist. Der erforderliche Bestandteil an Kali-Wasserglas muss beispielsweise genau bestimmt und auf geänderte Zusammerisetzungen der Schicht angepasst werden. Ferner lassen sich die Verfahren jeweils nur für eine Art von Brandschutzschicht einsetzen, während für andere Formen ein Bedarf nach angepassten Zumischungen oder sogar anderen Lösungen besteht.

Aus der Internationalen Patentanmeldung WO 99/35102 und der korrespondierenden Japanischen Patentanmeldung JP 111 99 278 ist eine UV-absorbierende Brandschutzverglasung bekannt, bei der sich vor einer im Brandfall aufschäumenden Brandschutzschicht eine UV-absorbierende Schicht befindet, die Amidverbindungen einer Aminosilanverbindung aufweist, welche mit einer UV-absorbierenden Verbindung reagieren. Dieses Verfahren eignet sich zwar für unterschiedliche Brandschutzschichten, ist aber mit hohem Aufwand verbunden.

Aufgabe der Erfindung ist es daher, eine einfach herzustellende Brandschutzverglasung mit wenigstens einer transparenten Brandschutzschicht bereitzustellen, welche eine hohe UV-Stabilität aufweist.

Erfindungsgemäß wird diese Aufgabe dadurch gelöst, dass eine Brandschutz-Verglasungseinheit, bestehend aus wenigstens zwei transparenten Substraten, die im Abstand zueinander angeordnet sind, wobei sich zwischen den Substraten wenigstens eine Brandschutzschicht befindet, so ausgeführt wird, dass sich auf wenigstens einer Seite der Brandschutzschicht eine transparente TiO₂-Schicht befindet, welche den Einfall von UV-Strahlung auf die Brandschutzschicht reduziert:

Um die UV-Strahlung des einfallenden Sonnenlichts zu absorbieren und für die dahinter liegende Brandschutzschicht zu reduzieren, befindet sich die TiO₂-Schicht zweckmäßigerweise auf der nach außen gerichteten Seite der Brandschutzschicht.

Es hat sich als zweckmäßig erweisen, die Brandschutz-Verglasungseinheit so auszugestalten, dass die Brandschutzschicht in Wellenlängenbereichen von 800 nm bis 1400 nm eine Absorption von mindestens 70% aufweist. Hierdurch wird ein Wärmedurchtritt in zu schützende Raumbereiche vermieden.

Ferner ist es vorteilhaft, die Brandschutz-Verglasungseinheit so zu gestalten, dass die TiO₂-Schicht in Wellenlängenbereichen von 320 nm bis 480 nm eine Absorption zwischen 3% und 15% aufweist. Hierdurch wird eine Beschädigung der Brandschutzschicht durch UV-Strahlung weitgehend vermieden.

Zur weiteren Erhöhung der Beständigkeit der in der Brandschutz-Verglasungseinheit enthaltenen Brandschutzschicht ist es zweckmäßig, die TiO₂-Schicht so auszugestalten, dass sie in Wellenlängenbereichen von 320 nm bis 480 nm eine Reflektion von mindestens 40% aufweist.

Eine besonders bevorzugte Ausführungsform der Brandschutz-Verglasungseinheit zeichnet sich dadurch aus, dass die TiO₂-Schicht in Wellenlängenbereichen von 320 nm bis 480 nm eine Reflektion von 40% bis 60% aufweist.

In einem vorteilhaften Ausführungsbeispiel der Erfindung befindet sich die UV-absorbierende TiO₂-Schicht auf der Oberfläche einer nach außen gerichteten Glasscheibe der Verglasungseinheit. In einem weiteren besonders bevorzugten Ausführungsbeispiel befindet sich die UV-absorbierende TiO₂-Schicht zwischen der inneren Oberfläche der nach außen gerichteten Glasscheibe und der Brandschutzschicht. Die Brandschutz-Verglasungseinheit kann neben wenigstens zwei auf Abstand positionierten Scheiben und der Brandschutzschicht weitere Funktionsschichten aufweisen. In Frage kommen dabei beispielsweise fluordotierte SnO₂-Schichten zur IR-Reflektion. Im Falle mehrerer funktionaler Schichten zwischen Außenscheibe und Brandschutzschicht, kann die TiO₂-Schicht auch zwischen den verschiedenen Schichten eingesetzt werden. Die Anordnung der Schicht wird zweckmäßigerweise so gewählt, dass die Funktion der umliegenden Schichten durch die Reduzierung der einfallenden UV-Strahlung nicht beeinträchtigt wird.

Schichten mit TiO₂-Bestandteilen werden herkömmlicherweise dazu verwendet, auf Glasoberflächen einen Autokatalyseeffekt zu erzeugen. Dieser Effekt dient zum Schutz der Oberfläche gegen Witterungseinflüsse und Verschmutzungen. Die UV-Absorbtionseigenschaften von TiO₂ führen jedoch beim Einsatz in Brandschutzverglasungen zu überraschenden Vorteilen. Zu den Vorteilen zählt insbesondere, dass die erfindungsgemäßen TiO₂-Schichten mit wenigen Verfahrensschritten und durch unterschiedliche Verfahren aufbringbar sind. Die Anordnung der Schicht innerhalb der Brandschutz-Glaseinheit kann ferner den Anforderungen entsprechend gewählt werden. Vorteilhaft ist außerdem, dass die UV-Stabilität unabhängig von der Art der Brandschutzschicht realisiert werden kann. Der erfindungsgemäße Schichtaufbau kann demnach für unterschiedliche Brandschutzschichten eingesetzt werden.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: Ein besonders bevorzugtes Ausführungsbeispiel einer Brandschutz-Glaseinheit mit einer TiO₂-Schicht zwischen einer äußeren Glasscheibe und einer Brandschutzschicht; und
- Fig. 2: ein Ausführungsbeispiel einer Brandschutz-Glaseinheit mit einer TiO₂-Schicht auf der Außenoberfläche einer Glasscheibe.

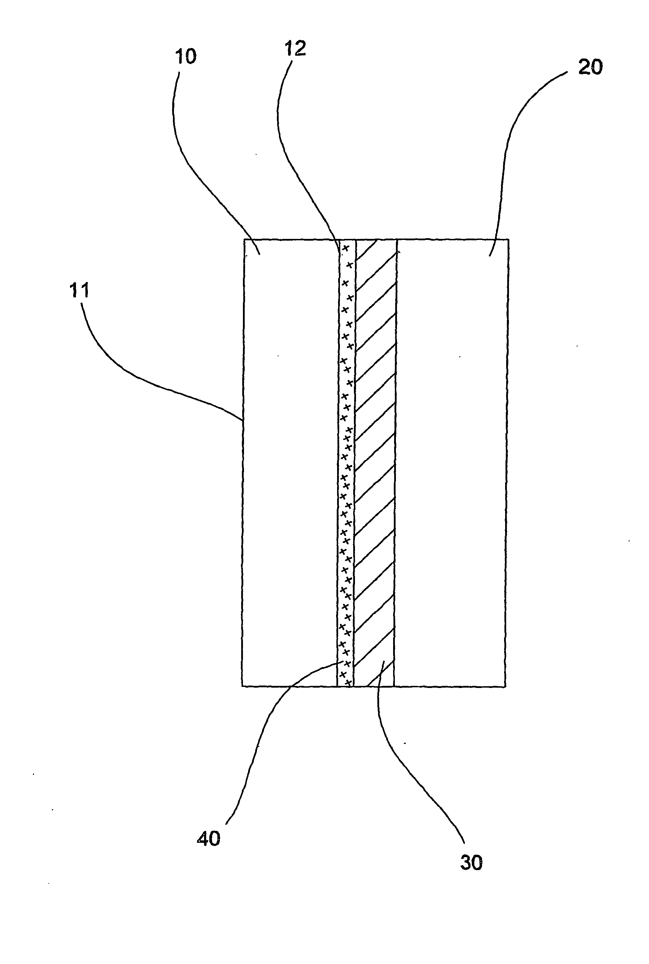

Der Abbildung in Fig. 1 ist ein besonders bevorzugtes Ausführungsbeispiel des erfindungsgemäßen Aufbaus einer Brandschutz-Verglasungseinheit mit TiO₂-Schicht zu entnehmen. Die Brandschutz-Verglasungseinheit besteht aus wenigstens zwei transparenten Glassubstraten (10; 20), die in einem Abstand zueinander positioniert sind, und wenigstens einer ebenfalls transparenten Brandschutzschicht (30), die sich zwischen den Glassubstraten befindet. Bei den verwendeten Glasscheiben kann es sich um übliche Scheiben zur Herstellung von transparenten Brandschutzverglasungen handeln.

Die Brandschutzschicht (30) kann verschiedenartig gebildet werden. Beispielsweise können bekannte Hydrogele zum Einsatz kommen, deren Hauptbestandteil Wasser mit Zumischungen an Salzen und stabilisierenden Polymeren ist. Die stabilisierenden Polymere dienen dabei als Gelbildner. Zur Anwendung können ferner Brandschutzmischungen kommen, die zu Wasserglas gebundenes Wasser, wenigstens ein Cellulose-Derivat und zweckmäßigerweise Konservierungsmittel aufweisen. Das Konservierungsmittel kann beispielsweise aus der Gruppe Kupfersulfat, Kupferacetat, Benzoesäure oder Mischungen davon ausgewählt werden.

Zur Herstellung der Brandschutzschicht können beispielsweise Sol-Gel-Techniken, Gel-Giessharzverfahren und/oder Aufgussverfahren verwendet werden. Bei den Aufgussverfahren kommen beispielsweise wasserhaltige Alkalisilikatlösungen vorzugsweise mit Beimischungen zum Einsatz, die auf eine waagerechte Glasscheibe aufgegossen werden. Das Wasser der Lösung wird durch Trocknungsprozesse entfernt, so dass sich die Schicht zu einer festen Brandschutzschicht verfestigt.

Derartige Brandschutzschichten weisen typischerweise Absorptionen von 4-15% der im Sonnenlicht befindlichen UVA-Strahlung auf. Ab einer Absorption von etwa 4% ist jedoch keine UV-Stabilität mehr gewährleistet. Der erfindungsgemäße Aufbau der Brandschutzverglasung mit einer transparenten TiO₂-Schicht (30) bewirkt eine Reduzierung der einfallenden UV-Strahlung in der Größenordnung von 80%, so dass die von der dahinter liegenden Brandschutzschicht absorbierte UV-Strahlung einen Wert von etwa 4% der gesamten einfallenden UV-Strahlung nicht überschreitet.

In dem in Fig. 1 dargestellten Ausführungsbeispiel befindet sich die TiO₂-Schicht zwischen der äußeren Glasscheibe (10) und der Brandschutzschicht (30). Zwischen diesen beiden Schichten können weitere Funktionsschichten angeordnet sein, die hier nicht dargestellt sind. Beispielsweise können zur zusätzlichen IR-Reflektion fluordotierte SnO₂-Schichten eingesetzt werden. Im Falle mehrerer funktionaler Schichten, kann die TiO₂-Schicht geeignet zwischen verschiedenen Schichten eingesetzt werden. Bei der Wahl des Schichtaufbaus ist zweckmäßigerweise ausschlaggebend, dass die Funktion der Schichten nicht durch die UV-Reduzierung beeinträchtigt wird.

Die Dicke der TiO₂-Schicht liegt in einem besonders bevorzugten Ausführungsbeispiel der Erfindung in der Größenordnung von 10nm bis 75nm. Es hat sich herausgestellt, dass die relevante UV-Protektion bei Schichtdicken von 10nm einsetzt, wobei maximal Schichtdicken von 75nm realisiert werden sollten, da sonst die Transparenz der Glaseinheit zu gering ist. Es hat sich daher zur Optimierung des Aufbaus als zweckmäßig erwiesen, insbesondere Schichtdicken von 20 bis 30nm einzusetzen.

Die TiO₂-Schichten können mit unterschiedlichen Verfahren aufgebracht werden. Beispielsweise kann ein Aufbringen von TiO₂ durch das Verfahren des Magnetsputterns erfolgen, das dabei vorzugsweise reaktiv und von einem keramischen Target durchgeführt wird. Ferner bieten sich Sol-Gelverfahren und CVD-Verfahren an.

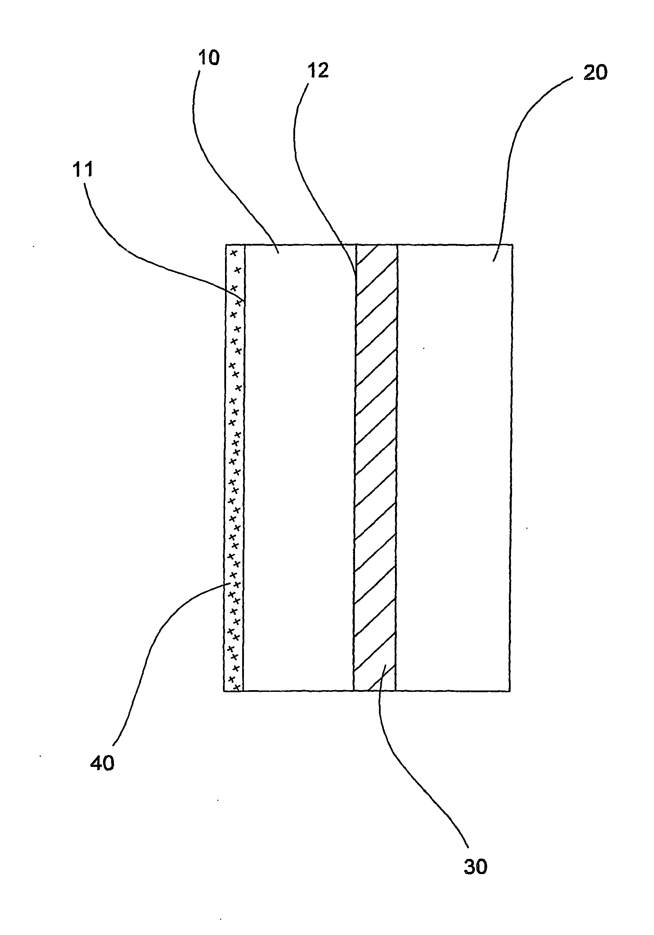

In Fig. 2 ist ein weiteres besonders bevorzugtes Ausführungsbeispiel der Erfindung dargestellt, bei dem sich die transparente TiO₂-Schicht auf der Außenoberfläche der nach außen gerichteten Glasscheibe befindet.

### Bezugszeichenliste:

- 10: Äußere Glasscheibe
- 11: Außenoberfläche der äußeren Glasscheibe
- 12: Innenoberfläche der äußeren Glasscheibe
- 20: Innere Glasscheibe
- 30: Brandschutzschicht
- 40: TiO₂-Schicht

## Patentansprüche

1. Brandschutz-Verglasungseinheit, bestehend aus wenigstens zwei transparenten Substraten (10; 20), die im Abstand zueinander angeordnet sind, wobei sich zwischen den Scheiben eine transparente Brandschutzschicht (30) befindet, **dadurch gekennzeichnet, dass** sich auf wenigstens einer Seite der Brandschutzschicht (30) eine transparente TiO₂-Schicht (40) befindet, welche den Einfall von UV-Strahlung auf die Brandschutzschicht (30) reduziert.

2. Brandschutz-Verglasungseinheit nach Anspruch 1, **dadurch gekennzeichnet, dass** sich die TiO₂-Schicht auf einer Außenoberfläche (11) einer nach außen gerichteten Glasscheibe (10) befindet.

3. Brandschutz- Verglasungseinheit nach einem oder beiden der Ansprüche 1 und 2, **dadurch gekennzeichnet, dass** sich die TiO₂-Schicht zwischen einer Innenoberfläche (12) einer nach außen gerichteten Glasscheibe (10) und der Brandschutzschicht (30) befindet.

4. Brandschutz-Verglasungseinheit nach einem oder mehreren der vorangegangenen Ansprüche, **dadurch gekennzeichnet, dass** die Brandschutz-Verglasungseinheit neben der Brandschutzschicht (30) und der transparenten TiO₂-Schicht (40) weitere Funktionsschichten aufweist.

5. Brandschutz-Verglasungseirheit nach einem oder mehreren der vorangegangenen Ansprüche, **dadurch gekennzeichnet, dass** die Schichtdicke der TiO₂-Schicht (40) in der Größenordnung von 10nm bis 75nm liegt.

6. Brandschutz-Verglasungseinheit nach einem oder mehreren der vorangegangenen Ansprüche, **dadurch gekennzeichnet, dass** die TiO₂-Schicht (40) mittels Magnetronsputtern, Sol-Gel-Verfahren oder CVD-Verfahren aufgebracht wird.

7. Brandschutz-Verglasungseinheit nach einem oder mehreren der vorangegangenen Ansprüche, **dadurch gekennzeichnet, dass** die Brandschutzschicht in Wellenlängenbereichen von 800 nm bis 1400 nm eine Absorption von mindestens 70% aufweist.

8. Brandschutz-Verglasungseinheit nach einem oder mehreren der vorangegangenen Ansprüche, **dadurch gekennzeichnet, dass** die TiO₂-schicht in Wellenlängenbereichen von 320 nm bis 480 nm eine Absorption zwischen 3% und 15% aufweist.

9. Brandschutz-Verglasungseinheit nach einem oder mehreren der vorangegangenen Ansprüche, **dadurch gekennzeichnet, dass** die TiO₂-Schicht in Wellenlängenbereichen von 320 nm bis 480 nm eine Reflektion von mindestens 40% aufweist.

10. Brandschutz-Verglasungseinheit nach Anspruch 9, **dadurch gekennzeichnet, dass** die TiO₂-Schicht in Wellenlängenbereichen von 320 nm bis 480 nm eine Reflektion von 40% bis 60% aufweist.

## Claims

1. A fireproof glazing unit consisting of at least two transparent glass substrates (10; 20) arranged at a certain distance from each other, whereby there is at least one transparent fireproof layer (30) between the glass panes, **characterized in that** there is a transparent TiO₂ layer (40) that reduces the incidence of UV radiation onto the fireproof layer (30) on at least one side of said fireproof layer (30).

2. The fireproof glazing unit according to Claim 1, **characterized in that** the TiO₂ layer is located on the outer surface (11) of the glass pane (10) facing outwards.

3. The fireproof glazing unit according to one or both of Claims 1 and 2, **characterized in that** the TiO₂ layer is located between an inner surface (12) of a glass pane (10) facing outwards and the fireproof layer (30).

4. The fireproof glazing unit according to one or more of the preceding claims, **characterized in that** the fireproof glazing unit comprises other functional layers in addition to the fireproof layer (30) and the transparent TiO₂ layer (40).

5. The fireproof glazing unit according to one or more of the preceding claims, **characterized in that** the thickness of the TiO₂ layer (40) lies in the order of magnitude from 10 nm to 75 nm.

6. The fireproof glazing unit according to one or more of the preceding claims, **characterized in that** the TiO₂ layer (40) is applied by means of magnetron sputtering, sol-gel methods or CVD methods,

7. The fireproof glazing unit according to one or more of the preceding claims, **characterized in that** the fireproof layer displays an absorption of at least 70% within the wavelength spectrum from 800 nm to 1400 nm.

8. The fireproof glazing unit according to one or more of the preceding claims, **characterized in that** the TiO₂ layer displays an absorption between 3% and 15% within the wavelength spectrum from 320 nm to 480 nm.

9. The fireproof glazing unit according to one or more of the preceding claims, **characterized in that** the TiO₂ layer displays a reflection of at least 40% within the wavelength spectrum from 320 nm to 480 nm.

10. The fireproof glazing unit according to Claim 9, **characterized in that** the TiO₂ layer displays a reflection of 40% to 60% within the wavelength spectrum from 320 nm to 480 nm.

## Revendications

1. Unité de vitrage coupe-feu, composée d'au moins deux substrats transparents (10; 20) qui sont disposés à distance l'un de l'autre, une couche coupe-feu transparente (30) se trouvant entre les plaques, **caractérisée en ce que** se trouve, sur au moins un côté de la couche coupe-feu (30), une couche transparente de TiO₂ (40) qui réduit l'incidence du rayonnement UV sur la couche coupe-feu (30).

2. Unité de vitrage coupe-feu selon la revendication 1, **caractérisée en ce que** la couche de TiO₂ se trouve sur une surface extérieure (11) d'une plaque de verre (10) tournée vers l'extérieur.

3. Unité de vitrage coupe-feu selon l'une des ou les deux revendications 1 et 2, **caractérisée en ce que** la couche de TiO₂ se trouve entre une surface intérieure (12) d'une plaque de verre (10) tournée vers l'extérieur et la couche coupe-feu (30).

4. Unité de vitrage coupe-feu selon l'une ou plusieurs des revendications précédentes, **caractérisée en ce que** l'unité de vitrage coupe-feu, outre la couche coupe-feu (30) et la couche transparente de TiO₂ (40), comporte d'autres couches fonctionnelles.

5. Unité de vitrage coupe-feu selon l'une ou plusieurs des revendications précédentes, **caractérisée en ce que** l'épaisseur de couche de la couche de TiO₂ (40) est de l'ordre de grandeur de 10 nm à 75 nm.

6. Unité de vitrage coupe-feu selon l'une ou plusieurs des revendications précédentes, **caractérisée en ce que** la couche de TiO₂ (40) est appliquée au moyen du dépôt magnétron, de procédés sol-gel ou de procédés CVD.

7. Unité de vitrage coupe-feu selon l'une ou plusieurs des revendications précédentes, **caractérisée en ce que** la couche coupe-feu présente une absorption d'au moins 70 % dans des plages de longueurs d'onde de 800 nm à 1400 nm.

8. Unité de vitrage coupe-feu selon l'une ou plusieurs des revendications précédentes, **caractérisée en ce que** la couche de TiO₂ présente une absorption comprise entre 3 % et 15 % dans des plages de longueurs d'onde de 320 nm à 480 nm.

9. Unité de vitrage coupe-feu selon l'une ou plusieurs des revendications précédentes, **caractérisée en ce que** la couche de TiO₂ présente une réflexion d'au moins 40 % dans des plages de longueurs d'onde de 320 nm à 480 nm.

10. Unité de vitrage coupe-feu selon la revendication 9, **caractérisée en ce que** la couche de TiO₂ présente une réflexion de 40 % à 60 % dans des plages de longueurs d'onde de 320 nm à 480 nm.
